(19) **Europäisches Patentamt**
**European Patent Office**
**Office européen des brevets**

(11) **EP 3 417 721 B1**

(12) **EUROPEAN PATENT SPECIFICATION**

(45) Date of publication and mention
of the grant of the patent:
**27.01.2021 Bulletin 2021/04**

(21) Application number: **18155855.2**

(22) Date of filing: **08.02.2018**

(51) Int Cl.:
*A23L 3/40* (2006.01)    *A23L 5/30* (2016.01)
*A23L 5/10* (2016.01)    *A23L 19/00* (2016.01)
*A23L 19/10* (2016.01)    *A23L 19/18* (2016.01)
*A23L 3/32* (2006.01)    *B01J 19/08* (2006.01)

(54) **ATMOSPHERICALLY FRIED CRISPS, EQUIPMENT AND METHOD FOR MAKING SAME**

ATMOSPHÄRISCH FRITTIERTE CHIPS, AUSRÜSTUNG UND VERFAHREN ZUR HERSTELLUNG DAVON

CHIPS FRITS ATMOSPHÉRIQUEMENT, ÉQUIPEMENT ET PROCÉDÉ POUR LEUR FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.06.2017 US 201715629425**

(43) Date of publication of application:
**26.12.2018 Bulletin 2018/52**

(73) Proprietor: **Frito-Lay North America, Inc.**
**Plano, TX 75024-4099 (US)**

(72) Inventors:
• **BHASKAR, Ajay Rajeshwar**
**Allen, TX Texas 75013 (US)**
• **RUEGG, Richard James**
**Frisco, TX Texas 75034 (US)**

• **SULLIVAN, Leslie Scott**
**Frisco, TX Texas 75034 (US)**

(74) Representative: **Harris, Oliver John Richard et al**
**Novagraaf UK**
**Centrum**
**Norwich Research Park**
**Colney Lane**
**Norwich NR4 7UG (GB)**

(56) References cited:
EP-A1- 1 994 836    WO-A1-01/97636
WO-A1-2006/121397    WO-A1-2014/161935
WO-A1-2017/024162    WO-A2-2006/053563
WO-A2-2007/041679    WO-A2-2014/068391
US-A1- 2008 241 315

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Technical Field

Fried produce crisps, and equipment and method for making the same are described herein. More specifically, this description relates to a pulsed electric field treatment chamber and method for preparing fried produce crisps from fruits or vegetables, the produce comprising sweet potatoes.

Description of Related Art

Some fruits and vegetables are often difficult to subject to frying processes in the production of shelf stable snack foods. For example, produce comprises high amounts of reducing sugars, sucrose, starch, and/or solids may be difficult to fry to a shelf stable moisture content without significant burning.
Sweet potatoes are rich in fiber, protein, vitamins, minerals, starch, and antioxidants. However, due to their high reducing sugar content and acrylamide (>1000 ppb) levels following dehydration, their use in snack foods has been limited to vacuum frying technology, which is not always economically feasible. Conventional frying process are generally limited to use of only fresh produce and result in highly variable acrylamide contents, ranging from 500-2,000 ppb, for example, and diminished orange coloring. Thus, they are difficult to fry atmospherically to a shelf stable moisture content as they turn dark at around 2.5% moisture content. There is a need for an alternate solution to process these such produce without the high costs of vacuum frying and without the variability and inconsistent product resulting from conventional frying. In particular, given the popularity of kettle cooked potato chips, there is a need for a solution that produces the kettle cooked products' crisp sensation with a consistently appealing look and taste.
WO2006/121397 A1 discloses a method for continuous treatment of plant material such as for example root vegetables, comprising the steps of applying an electric field to the plant material, using such a field strength that pores are created in the cell membranes of the plant cellular material, resulting in an enhanced rate of mass transfer of intracellular and/or extracellular substances, which can be removed from said plant cellular material by washing in a liquid at low temperatures.
US2008/241315 A1 discloses that enzymatic effect on an intracellular substrate present in vegetable cells with a membrane can be increased by pre-treating the vegetable material with a pulsed electric field.
EP1994836 A1 discloses a method of lowering and controlling the content of reducing sugars in a potato raw material without affecting the cell wall or starch structure, said method comprising the steps of suspending the potato raw material in an aqueous carrier and applying moderate electric field pulses having a field strength in the range of from 200 to 10,000 V/cm, or a moderate electric alternate current field having a field strength in the range of from 100 to 400 V/cm to the suspended potato raw material.
WO01/97636 A1 discloses a process for treating vegetables and fruit in order to reduce their resistance to cutting.
WO2014/161935 A1 discloses a method for reducing the level of asparagine in a food material to be heat-treated comprising soaking the food material in water and contacting at least part of the soaking water with an immobilized asparaginase.
WO2017/024162 A1 discloses a method and system for producing potato chips with widely varying organoleptic characteristics.
WO2006/053563 A2 discloses a process for production of cooked vegetable food materials having reduced levels of acrylamide.

SUMMARY

In one aspect, the present invention provides a method according to claim 1. In another aspect, the present invention provides an atmospherically fried sweet potato crisp according to claim 6. In a still further aspect, the present invention provides a pulsed electric field treatment chamber according to claim 7. Certain more specific aspects of the invention are set out in the dependent claims.
Provided herein are ready-to-eat fried sweet potato crisps manufactured directly from raw sliced fruits or vegetables (i.e., produce). The crisps are shelf-stable and light in color despite the reducing sugar content present in the raw produce.
Below is a simplified summary of this disclosure meant to provide a basic understanding of some aspects of the products and methods described herein. This is not an exhaustive overview and is not intended to identify key or critical elements or to delineate the scope of the description. Its sole purpose is to present some concepts in a simplified form as a prelude to the more detailed description below.

In one aspect, disclosed herein is a method for making fried produce crisps that comprises the steps of applying a pulsed electric field to a plurality of raw whole produce in a pulsed electric field treatment chamber, the treatment chamber comprising a treatment space between a negative and a positive electrode, the negative and positive electrodes oriented in a vertical configuration; slicing the pulsed produce into slices having a thickness of less than 2.5mm; immediately blanching the slices in a water solution at a temperature of above 62.8°C (145°F) to form blanched produce slices; and frying the blanched produce slices to form a plurality of produce crisps, wherein the pulsed electric field applied to the raw produce comprises an electric field of at least 0.8 kV/cm, wherein the produce comprises sweet potatoes, and wherein the frying step comprises frying to a finished moisture content of less than 3.5% and the plurality of produce crisps comprises an oil content of between 28% and 44%.

In another aspect, a pulsed electric field treatment chamber comprises: an inner chamber comprising a predetermined water solution level; an upper conveyor belt having at least its bottom surface below the predetermined water solution level; a lower conveyor belt entirely below the predetermined water solution level; and a negative electrode opposite a positive electrode on either side of the lower conveyor belt, the negative electrode and the positive electrode oriented vertically and the negative electrode fully submerged within the predetermined water solution level, wherein said chamber is configured to provide a pulsed electric field to a treatment space between the bottom surface of the upper conveyer belt and a top surface of the lower conveyor belt, and between the negative electrode and the positive electrode.

Other aspects, embodiments and features of the invention will become apparent in the following written detailed description and accompanying drawings.

BRIEF DESCRIPTION OF THE DRAWINGS

The novel features believed characteristic of the invention are set forth in the appended claims. The invention itself, however, as well as a preferred mode of use, further objectives and advantages thereof, will be best understood by reference to the following detailed description when read in conjunction with the accompanying drawings, wherein:

**Figure 1** depicts a flow chart for making a shelf-stable produce crisps as described herein.
**Figure 2A** depicts an internal view of a pulsed electric field treatment chamber in one embodiment as described herein.
**Figure 2B** depicts a cutaway view of the pulsed electric field treatment chamber of Figure 2A.
**Figure 3** depicts passage of the raw whole produce through a treatment space between the vertically oriented electrode configuration according to one embodiment.
**Figure 4** is an illustration depicting a comparison between the resulting textures of an un-treated produce product versus one that is treated by the pulsed electric field application described herein.
**Figure 5** is a graphical representation showing the comparative levels of resulting oil contents using different treatments.
**Figure 6** is a graphical representation showing the comparative amounts of acrylamide levels with and without the treatment described herein.

DETAILED DESCRIPTION

The words and phrases used herein should be understood and interpreted to have a meaning consistent with the understanding of those words and phrases by those skilled in the relevant art. No special definition of a term or phrase, i.e., a definition that is different from the ordinary and customary meaning as understood by those skilled in the art, is intended to be implied by consistent usage of the term or phrase herein. To the extent that a term or phrase is intended to have a special meaning, i.e., a meaning other than that understood by skilled artisans, such a special definition is expressly set forth in the specification in a definitional manner that directly and unequivocally provides the special definition for the term or phrase.

The terms "including," "comprising," "having," and variations thereof mean "including but not limited to," unless expressly specified otherwise. When used in the appended claims, in original and amended form, the term "comprising" is intended to be inclusive or open-ended and does not exclude any additional, unrecited element, method, step or material. The term "consisting of" excludes any element, step or material other than those specified in the claim. As used herein, "up to" includes zero, meaning no amount (*i.e.*, 0%) is added in some embodiments. The term "immediately" means as soon as practicable, without any intervening step(s).

As used herein, produce refers to fruits and/or vegetables grown by farming. In one embodiment, produce refers to root vegetables comprising solids in an amount between about 10% to about 40%. In one embodiment, produce refers to root vegetables comprising solids in an amount greater than about 30% by weight of the produce. In one embodiment, produce refers to root vegetables comprising solids in an amount between about 30% to about 40% by weight of the produce. In one embodiment, produce refers to root vegetables comprising solids in an amount between about 10% to about 25% by weight of the produce. In one embodiment, produce refers to root vegetables comprising solids in an amount between about 10% to about 20% by weight of the produce. In one embodiment, the raw produce for use with the method and product described herein comprises a high reducing sugar concentration of greater than about 0.05% to about 4.0%. In one embodiment, the sucrose content is greater than about 1% and up to about 6%. In accordance with the invention, the produce comprises sweet potatoes. The produce may further comprise one or more of apples, beets, carrots, pumpkins, parsnips, taro root, and yucca.

In one embodiment, the produce consists of sweet potatoes. With further regard to the above challenges of processing produce such as sweet potatoes, the sugar profile of raw sweet potatoes (prior to treating steps described herein) should be noted. Though their name might imply otherwise, sweet potatoes are actually very different from white potatoes. Though they have in common the presence of reducing sugars - glucose, sucrose and fructose, the sugar profile of sweet potatoes versus white flesh potatoes is actually so different that sweet potatoes cannot be expected to behave in the same way as regular, or white, potatoes. Indeed, sweet potatoes pose more challenges in their processing due to the different sugar profile. The content of sucrose is roughly ten times higher in sweet potatoes than in white potatoes. By way of example, raw white chipping potatoes comprise an amount of about 0.1% reducing sugars and about 0.05% sucrose, whereas sweet potatoes contain between 1% to 6% sucrose. Sweet potatoes are also high in beta-amylase and high in glucose. Thus, processes involving dehydration to shelf stable moisture contents are more challenging for sweet potatoes. Color in sweet potatoes is not only subject to Maillard reactions but also further influenced by caramelization, a type of non-enzymatic browning, and is not fueled by the presence of amino acids unlike Maillard browning. Table 1 reflects the caramelization temperatures of the reducing sugars in sweet potatoes.

Table 1. Caramelization Temperatures of Reducing Sugars

| Sugar | Caramelization Temp |
|---|---|
| Fructose | 110°C, 230°F |
| Galactose | 160°C, 320°F |
| Glucose | 160°C, 320°F |
| Maltose | 180°C, 356°F |
| Sucrose | 160°C, 320°F |

Brown pigments generated through the caramelization process can be controlled by the process described herein using a low temperature frying profile as described below. Using the process described herein, all sugars are reduced by roughly 50%, regardless of the particular variety of sweet potato. All sugars are affected equally and observe a proportional reduction using the method described herein.

Several options for snack foods described herein and methods for making same will now be described with reference to the figures. Unless otherwise noted, like elements will be identified by identical numbers throughout all figures.

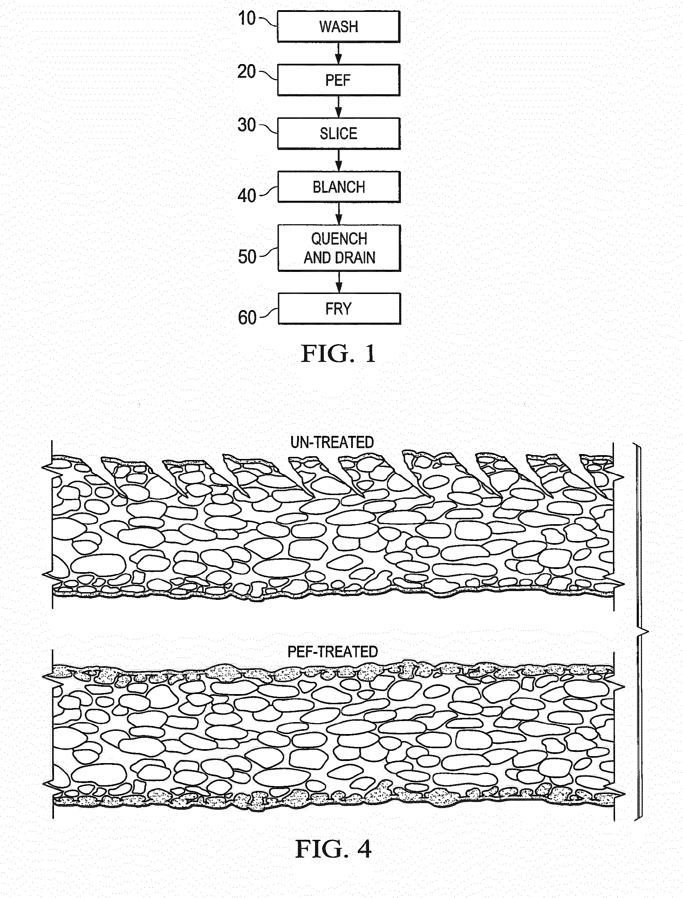

Figure 1 is a flow chart for making shelf-stable fried crisps as described herein. It should be noted that this figure is for illustrative purposes and is not meant to be limiting unless otherwise indicated. Some methods may comprise all the steps shown in Figure 1, while others may omit washing and/or rinsing steps shown in Figure 1. The steps of the method of the invention are set out in appended claim 1.

With reference to Figure 1, the method can include a first step of washing whole raw produce 10 to remove any dirt or foreign objects that may have attached to the produce. Suitable washing solutions comprise, for example, water at room temperature or a freshwater solution comprising an anti-foaming agent. Optionally, the washing solution is free of salts. Optionally, the washing solution consists of water. Such step may not always be necessary. The produce may be optionally sized after washing. Optionally, the produce is peeled. Optionally, the produce is sliced to a length no greater than about 10.2 cm (about 4 inches). Optionally, the produce remains unpeeled having its peel, rind, skin, and inside cellular material or flesh intact.

After washing 10 but before any slicing, the whole raw produce is subjected to a pulsed electric field ("PEF") 20 to enhance mass transfer. Electroporation enables the extraction of intracellular substances from the cells of the raw produce. The treatment chamber is arranged to receive the produce in solid phase, with a liquid transport carrier, past at least two electrodes, where the pulse generator is arranged to apply a PEF to a treatment space between the electrodes. In one embodiment, the process is continuous and raw whole produce is conveyed on a conveyor belt system to and through the PEF equipment, where the treatment space receiving the PEF is across a portion of a conveyor belt submerged in the liquid transport carrier. During test runs, a 30-kV unit was used at a repetition rate of 300Hz at 3.66 m/minute (12 feet/minute).

In one embodiment, the applied electric field is a pulsed electric field in the form of rectangular or (exponential) mono polar (bipolar) pulses. In accordance with the present invention, the whole raw produce is subjected to an electric field strength of at least 0.8 kV/cm. In one embodiment, the whole raw produce is subjected to an electric field strength of between 0.8 to about 3.0 kV/cm. In one embodiment, the electric field strength ranges from about 1.1 to about 2.0 kV/cm. In one embodiment, the electric field strength ranges from about 1.5 to about 2.2 kV/cm. In one embodiment, about 1,000 pulses per second are applied. In one embodiment, the number of pulses applied is between about 70 to about 80.

Based on data on the frequency dependency of conductivity of intact and permeabilized plant tissues, a coefficient $Z_p$, designated the disintegration index, was used to determine a suitable PEF treatment level. A $Z_p$ value, or disintegration index, of about 0.2 to about 0.35 is used herein and may be determined using the following formula:

$$Z_p = 1 - b* [(K'_h - K'_l)/K_h - K_l)];$$

$b = K_h/K'_h; 0 \leq Z_p \leq 1$

Where $K_l$, $K'_l$ = electrical conductivity of untreated and treated materials, respectively, in a low-frequency field (1-5 kHz); $K_h$, $K'_h$ = electrical conductivity of untreated and treated materials, respectively, in a high-frequency field (3-50 MHz). For intact cells, $Z_p= 0$; for total cell disintegration, $Z_p = 1$.

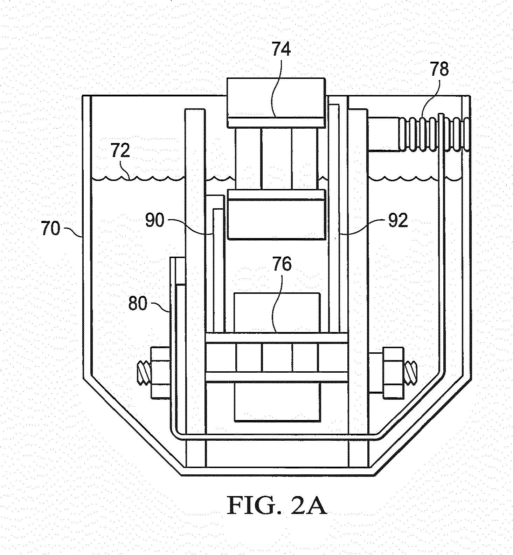

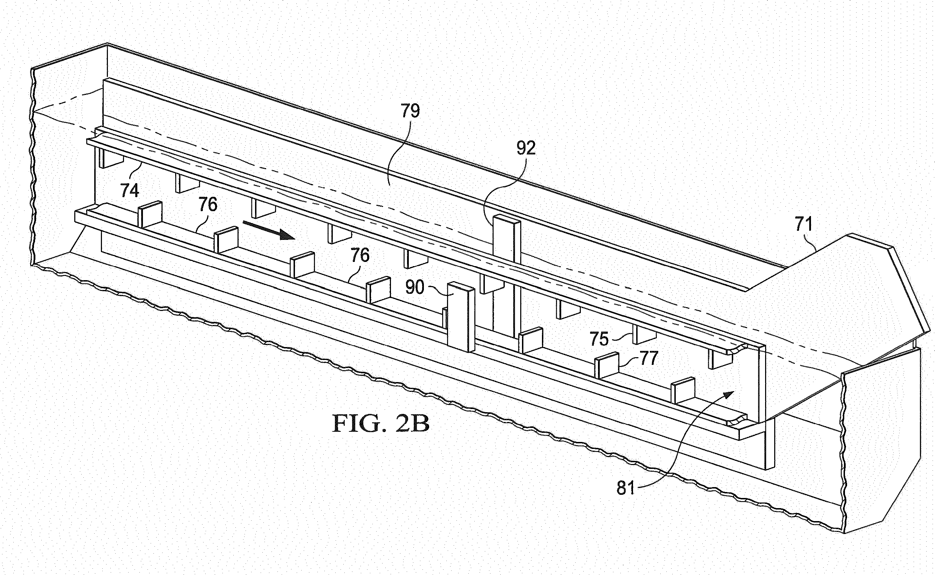

Figures 2A and 2B show one embodiment of a PEF treatment chamber 70 through which produce is treated according to the above described method of Figure 1 to provide consistent z-value data and desirable crisp products. The unit 70 is comprised of stainless steel tub with sidewalls 71 comprising sidewall insulators 79 around an inner chamber that comprises a predetermined water solution level 72, an upper conveyor belt 74 above the predetermined water solution level 72, a lower conveyor belt 76 below the predetermined solution water level 72, and a vertically oriented electrode configuration 90, 92 on opposing sides of a top surface of the lower conveyor belt 76. Stainless steel walls 71 support the belting and the drives while the inner chamber around the electrodes comprises polymer insulators of ultrahigh molecular weight. The vertically oriented electrode configuration comprises a positive electrode 92 and a negative electrode 90, the negative electrode 90 fully submerged beneath the predetermined water solution level 72. The predetermined amount is a sufficient amount such that at least the bottom of the top conveyor is submerged within the water solution. The chamber unit 70 is configured to provide or apply a pulsed electric field to a treatment space between the negative electrode 90 and the positive electrode 92, and between a bottom surface of the upper conveyor belt 74 and a top surface of the lower conveyor belt 76.

Raw produce is fed into the unit 70 below the upper conveyor belt 74, above the lower conveyor belt 76. Flights 75 on the upper conveyor belt 74 ensure that the produce remains below the predetermined water solution level 72 when the produce is moved by the upper conveyor belt 74 along the produce flow direction indicated by the arrow in Figure 2B. Similarly, flights 77 on the lower conveyor belt 76 help ensure the produce flow continues to move in the produce flow direction. In one embodiment, the conveyor belts 74, 76 comprise plastic. In one embodiment, the plastic comprises an ultrahigh molecular weight plastic. In one embodiment, an electrode strap 80 is connected to the negative electrode and passes under the lower conveyor belt 76 to an electrical terminal 78, which is insulated from the sidewall of the tank. The terminal 78 may also connect to the positive electrode 92 such that current flows through the positive electrode 92 and down the equipment across the liquid or water level. During operation, the unit 70 may be closed to minimize electrical field interference and comply with safety mechanisms of the PEF chamber. In one embodiment, the positive electrode 92 is only partially submerged below the predetermined water solution level. That is, the positive electrode 92 is longer than the negative electrode 90 and the lower ends of the electrodes 90, 92 are aligned at substantially the same depth in the water. The positive electrode is longer than the negative electrode in one embodiment and electrically connected above the predetermined water level 72. In such embodiment, the positive electrode extends above the predetermined water solution level, or out of the water solution. Air within the chamber 70 also acts as an insulator for the positive electrode 92. The inventors have found that the vertically oriented electrode configuration provides for an uninterrupted treatment space within the chamber 70 and provides a more localized field for consistent z-value data. In one embodiment, the positive electrode is substantially parallel to the negative electrode. As used herein, the term "substantially" refers to the complete or nearly complete extent or degree of an action, characteristic, property, state, structure, item, or result. For example, the "substantially" parallel electrodes are either completely parallel or nearly completely parallel.

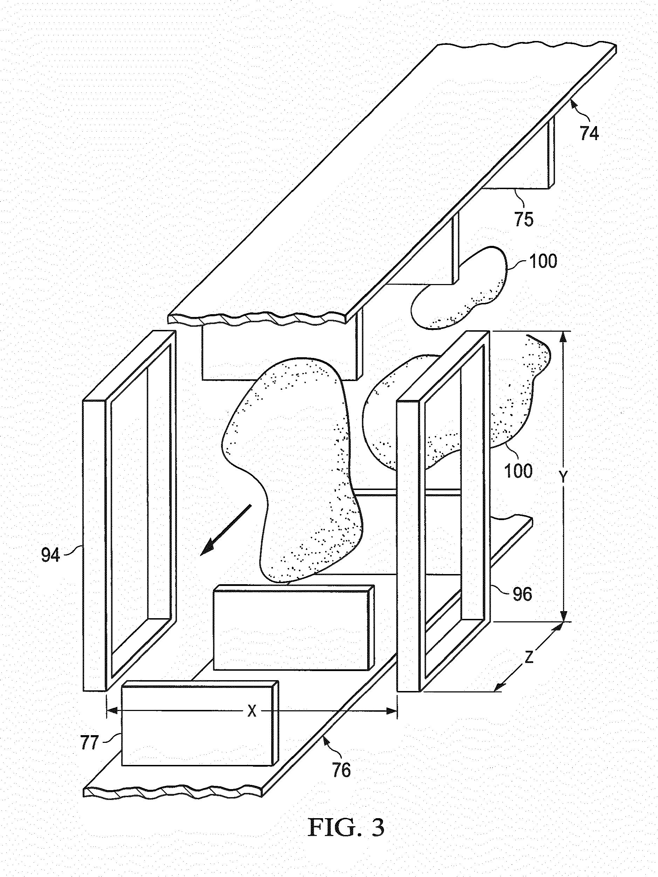

Figure 3 depicts passage of the raw whole produce 100 through a treatment space between the vertically oriented electrode configuration according to one embodiment. In this embodiment, the positive and negative electrodes 94, 96 remain on either side of the dual belt system, however, the electrodes 94, 96 are of equal or substantially equal length. In one embodiment, the positive electrode is connected to the positive terminal via an insulated connector. One skilled in the art, armed with this disclosure, can determine the dimensions of the electrodes (i.e., treatment space) according to the size of the produce desired to be treated and the required range of applied electric field disclosed above. During successful test runs, the electrode width Z was about three inches, the electrode height Y was between about 7.6 cm to about 21.6 cm (about 3 to about 8.5 inches), and the electrode gap X was between about 7.6 cm to about 20.3 cm (about 3 to about 8 inches). Increasing electrode width drops the field and may require a corresponding increase in generator power to apply the disclosed electric field.

With reference back to Figure 1, following application of the pulsed electric field 20, the whole raw produce is then sliced 30. The whole produce is sliced into slices comprising a thickness of less than 2.5 mm (less than 0.1 inch). In one embodiment, the thickness is less than about 2.3 mm (about 0.09 inch). In one embodiment, the thickness is between about 1.5 mm and about 2.0 mm (about 0.06 and about 0.08 inches). In one embodiment, the thickness is about 1.8 mm (about 0.07 inch). At thicknesses outside the values and ranges disclosed herein, the slices will not dehydrate uniformly and the process will therefore result in a dense and chewy product. One skilled in the art armed with this disclosure can easily determine how to perform the slicing step 30.

Immediately after slicing 30 (i.e., without any intervening step following slicing), the slices are subjected to a blanching step 40 in a water solution (e.g. in a turbulent environment comprising continuous agitation with water and air injection, free of mechanical agitation). Blanching is performed at a temperature of above 62.8°C (e.g. above about 67.8°C (about 145°F) for less than about 6 minutes). In one embodiment, blanching is performed at temperatures of above about 71.1°C (about 160°F). In one embodiment, blanching is performed at temperatures of above 71.1°C and about 82.2°C (about 160°F and about 180°F). In one embodiment, the blanching is performed for between about 2 to about 5.5 minutes. In one embodiment, the blanching is performed at between about 67.8°C and about 90.6°C (about 145°F to about 195°F) for between about 1 to about 6 minutes. In one embodiment, the blanching is performed at between about 71.1°C and about 82.2°C (about 160°F to about 180°F) for between about 3 to about 4 minutes. Dense produce comprising higher amounts of starch may require longer blanching times. In certain embodiments, the blancher selected may comprise a rotary blancher with a substantially sealed housing and a water supply for injecting water or steam into the blancher to heat the blancher and maintain the temperature at the set point temperature. As used herein, a turbulent environment is one configured to keep slices separated during blanching. Slice agitation may be performed, for example, using a screw within a water chamber comprising a water recirculation rate configured to recirculate water to keep slices separated. During test runs, a rotary drum blancher and a blower manufactured by Lyco Manufacturing Inc.® was used.

Following the required blanching period and temperature, Figure 1 depicts an optional quenching and draining step 50 prior to frying 60. Such quenching and draining step performs the function of water removal to improve frying efficiency in some embodiments. The frying step can be an atmospheric frying step performed at a low inlet oil temperature of between approximately 137.8°C to about 157.2°C (280°F to about 315°F). In another embodiment, the inlet oil temperature may range from about 140.6°C to about 146.1°C (about 285°F to about 295°F). In one embodiment, the inlet temperature is about 137.8°C (about 280°F). In one embodiment, the frying is performed for up to about 14 minutes. In one embodiment, the frying is performed for up to about 12.5 minutes. In one embodiment, the frying can be performed in as little as about 5 minutes. In one embodiment, the frying can be performed from about 5 to about 14 minutes. In one embodiment, the discharge oil temperature is between about 126.7°C to about 143.3°C (about 260°F to about 290°F). In one embodiment, the discharge oil temperature is between about 132.2°C to about 137.8 (about 270°F to about 280°F). In one embodiment, the discharge oil temperature is about 135°C to about 136.7°C (about 275°F to about 278°F). In the claimed invention, frying is performed to a finished moisture content of less than 3.5%. In one embodiment, the frying is performed until a finished moisture of between about 2% to less than 3.5% is achieved. In one embodiment, the frying is performed until a finished moisture of between about 2.7% and about 3.3% is achieved. In one embodiment, the frying is performed until a finished moisture of about 2.5% is achieved.

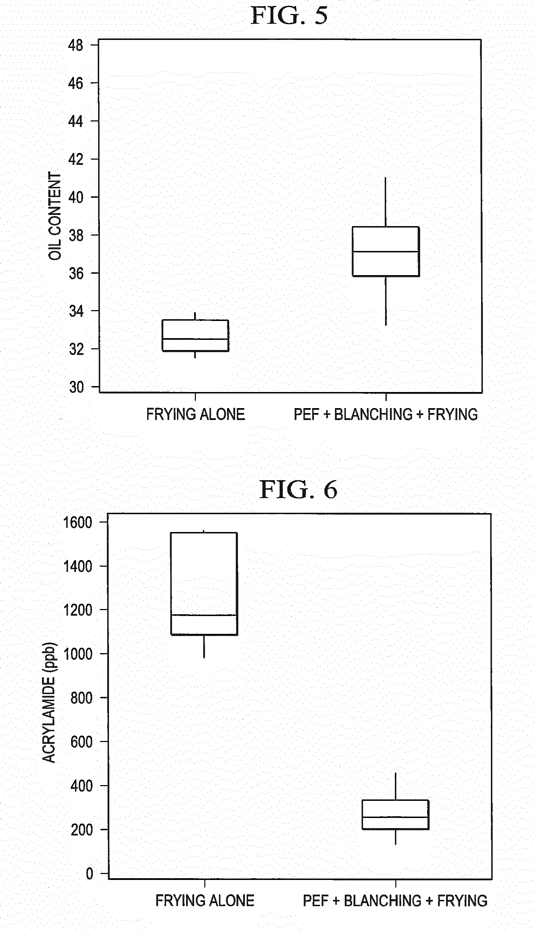

In the claimed invention, frying is performed such that the plurality of produce crisps comprises an oil content of between 28% and 44%, preferably between about 30% and about 40%. In one embodiment, the finished fried product comprises an oil content of between about 32% and about 39%. In one embodiment, the finished fried product comprises an oil content of between about 35% and about 38%. In one embodiment, the finished fried product comprises an oil content of between about 38% and 39%. Figure 5 is a graphical representation, for example, of comparative oil contents for an untreated atmospherically fried product versus product that underwent the PEF treatment followed by blanching as described herein. Unlike vacuum-fried produce, for which a dense and oily texture is obtained, the resulting fried crisp described herein is not as oily.

Subjecting the produce to the method described herein results in a number of benefits. Across several varieties of tested sweet potatoes, the process described herein consistently delivered acrylamide levels below 250 ppb. Comparative data for different treatments can be seen in Figure 6. Moreover, both reducing sugars and sucrose are reduced in half using the method and equipment described herein, versus prior art frying processes without the pre-treatments described herein. Table 2 demonstrates the average amounts of reducing sugars (glucose, fructose) and sucrose during trial runs comparing untreated sweet potato crisps versus sweet potato crisps pre-treated using the method comprising the PEF and blanching steps in this description. Both high and low end values of the ranges for the reducing sugars and sucrose were lower for the pre-treated crisps than for the untreated crisps in all trial runs, the number of which exceeded 600.

Table 2. Average Reducing Sugars and Sucrose Across All Trials

| Process | Average Reducing Sugars (Glucose, Fructose) | Average Sucrose |
| --- | --- | --- |
| Untreated crisps | 1.01 | 4.1 |
| Pre-treated crisps | 0.51 | 2.6 |

Figure 4 is an illustration comparing an un-treated cellular matrix material to a PEF treated material. The PEF treatment maintains cell wall integrity of the sweet potatoes, and thus, in combination with the below described blanching and frying steps, improves the texture to provide more crispness in the finished product. As depicted in Figure 4, the treatments described herein result in a crust formation that contributes to an improved texture. Textural data was obtained used a TA.XT2 Texture Analyzer. The Three Point Bending Test was performed by supporting the sample horizontally with the probe moving down bending it at the center. As the specimen bends, it stores up strain energy, which at the point of fracture is dissipated as a cracking snap. The breaking upon the application of a force is a desirable textural property in most crisp foods. The puncture test was performed using a 5-mm diameter, flat-tip puncture probe. The test speed was 20 mm/sec with an aim of at least 30 measurements for each sample and each is punctured through the center of the chip. The hardness ranges from between 395 to 800 grams peak force. In one embodiment, the hardness ranges from between about 435 to about 685 grams peak force. In one embodiment, the hardness ranges from between about 515 to about 615 grams peak force. In the claimed invention, the fried sweet potato crisp has a thickness of less than 2.5mm, such as from about 1.65 mm to about 2.03 mm (about 0.065 inches to about 0.080 inches). In one embodiment, the slice thickness for the product ranges from about 1.65 mm to about 1.91 mm (about 0.065 inches to about 0.075 inches). In one embodiment, the slice thickness for a plurality of packaged product comprises an average of about 1.78 mm (about 0.07 inches).

In certain embodiments, ready-to-eat produce crisps made using the method and equipment described herein comprising or consisting of a coloring substantially equivalent to the coloring of the raw, untreated produce. In embodiments wherein the produce consists of sweet potatoes, for example, the resulting cooked crisps are sweet potato crisps substantially comprising a single color, the single color substantially same as, or equivalent to, the natural color of the uncooked raw sweet potato. As used herein "substantially comprising a single color" means that only one single color within the base of the crisp is detectable to the naked, untrained eye. In some embodiments, though more than one gradation or shade of a color (i.e., hues) may be somewhat visible to the naked eye, the untrained eye will typically perceive a single color. For purposes of describing the favorable coloring that can only be achieved with sweet potatoes as described herein, the color is described under the standards set forth by the Hunter Lab color space.

Hunter L, a, b color space is a three-dimensional rectangular color space based on Opponent-Colors Theory. "L" indicates lightness and "a" and "b" indicate the color-opponent dimensions, further described below, based on nonlinearly compressed (e.g. CIE XYZ) coordinates. C.I. is a prefix for a listing of colorants listed according to Color Index Generic Names and Color Index Constitution Numbers as established by the Color Index International (CIE), which is a reference database jointly maintained by the Society of Dyers and Colourists and the American Association of Textile Chemists and Colorists. Thus, the color scale values are used to define the darkness/lightness of the resulting crisps.

All colors can be represented in L, a, b rectangular color space. In general, Hunter Color "L" scale values are chambers of light reflectance measurement, and the higher the value is, the lighter the color is since a lighter colored material reflects more light. Generally, the "L" axis denotes the level of white/black, or lightness, where 0 is black, 100 is white and 50 is middle gray. For the "a" (red-green) axis, positive values are red, negative values are green, and 0 is neutral. For the "b" (blue-yellow) axis, positive values are yellow, negative values are blue, and 0 is neutral. In particular, in the Hunter Color system the "L" scale contains 100 equal units of division. Absolute black is at the bottom of the scale (L=0) and absolute white is at the top of the scale (L=100). The color gray can be represented by "L" values between 0 and 100 at a and b values of zero.

In embodiments consisting of sweet potato, resulting crisps comprise an L-value of about 34 to about 65. In one embodiment, the L-value is about 44 to about 58. In another embodiment, the L-value is about 48 to about 53. In one embodiment, the a-value is about 12 to about 30. In one embodiment, the a-value is about 16 to about 25. In one embodiment, the a-value is about 18 to about 22. In one embodiment, the b-value is about 15 to about 35. Table 3 indicates color values as determined using a D25Lt Colorimeter manufactured by HunterLab. Oil content and moisture percentages are also indicated for the resulting crisps.

Table 3. Resulting characteristics of improved sweet potato crisps

| PEF + blanched samples | L value | A value | B value | Moisture (%) | Oil (%) |
|---|---|---|---|---|---|
| 1 | 47.29 | 19.66 | 27.85 | 2.78 | 31.59 |
| 2 | 42.18 | 20.42 | 24.10 | 1.94 | 43.60 |
| 3 | 46.87 | 18.48 | 27.68 | 2.60 | 42.37 |
| 4 | 42.51 | 18.07 | 25.08 | 2.67 | 33.99 |
| 5 | 44.04 | 15.81 | 25.22 | 2.57 | 36.32 |
| 6 | 44.59 | 20.69 | 25.83 | 2.87 | 43.02 |
| 7 | 41.41 | 19.56 | 23.93 | 2.13 | 45.16 |

Unless otherwise specified, all percentages, parts and ratios as used herein refer to percentage, part, or ratio by weight of the total. Unless specifically set forth herein, the terms "a", "an", and "the" are not limited to one of such elements, but instead mean "at least one," unless otherwise specified. The term "about" as used herein refers to the precise values as indicated as well as to values that are within statistical variations or measuring inaccuracies.

The methods disclosed herein may be suitably practiced in the absence of any element, limitation, or step that is not specifically disclosed herein. Similarly, specific snack food embodiments described herein may be obtained in the absence of any component not specifically described herein. Thus, the crisps described herein may consist of those listed components as described above.

Concentrations, amounts, and other numerical data may be expressed or presented herein in a range format. It is to be understood that such a range format is used merely for convenience and brevity and thus should be interpreted flexibly to include not only the numerical values explicitly recited as the limits of the range, but also to include all the individual numerical values or sub-ranges encompassed within that range as if each numerical value and sub-range is explicitly recited. For example, the range 1 to 10 also incorporates reference to all rational numbers within that range (i.e., 1, 1.1, 2, 3, 3.9, 4, 5, 6, 6.5, 7, 8, 9 and 10) and also any range of rational numbers within that range (for example, 2 to 8, 1.5 to 5.5 and 3.1 to 4.7) and, therefore, all sub-ranges of all ranges expressly disclosed herein are hereby expressly disclosed. These are only examples of what is specifically intended and all possible combinations of numerical values between the lowest value and the highest value enumerated are to be considered to be expressly stated in this application in a similar manner.

## Claims

1. A method of making fried produce crisps, the method comprising the steps of:

   applying a pulsed electric field to a plurality of raw whole produce in a pulsed electric field treatment chamber, the treatment chamber comprising a treatment space between a negative and a positive electrode, the negative electrode and the positive electrode oriented in a vertical configuration;
   slicing the pulsed produce to form slices having a thickness of less than 2.5 mm (0.1 inch);
   immediately blanching the slices in a water solution at a temperature of above 62.8 °C (145 °F) to form blanched slices; and
   frying the blanched slices to form a plurality of produce crisps;
   wherein the pulsed electric field applied to the raw produce comprises an electric field of at least 0.8 kV/cm;
   wherein the produce comprises sweet potatoes; and
   wherein the frying step comprises frying to a finished moisture content of less than 3.5% and the plurality of produce crisps comprises an oil content of between 28% and 44%.

2. The method of claim 1 wherein the pulsed electric field applied to the raw produce comprises an electric field of from 0.8 to 3.0 kV/cm.

3. The method of claim 1 or claim 2, wherein the blanching step is in a turbulent environment comprising continuous agitation with water and air injection, free of mechanical agitation, and/or the blanching comprises a temperature of between 62.8 °C and 90.6 °C (145 °F and 195 °F) and/or wherein the water solution is free of salts.

4. The method of any one of claims 1 to 3, wherein the blanching step is performed for less than 6 minutes and/or the frying step is performed for up to 14 minutes.

5. The method of any foregoing claim wherein the plurality of produce crisps comprises an oil content of between 28% and 40%.

6. An atmospherically fried sweet potato crisp, made by the method of any foregoing claim in which the frying step is an atmospherically frying step to form a plurality of shelf-stable sweet potato crisps, wherein the atmospherically fired sweet potato crisp comprises a hardness of 395 to 800 grams peak force, as determined by a texture analyser, an oil content of 28% to 44%; a thickness of less than 2.5 mm (0.1 inch), and a moisture content of less than 3.5%.

7. A pulsed electric field treatment chamber (70), said chamber comprising:

an inner chamber comprising a predetermined water solution level (72);
an upper conveyor belt (74) having at least its bottom surface below the predetermined water solution level (72);
a lower conveyor belt (76) entirely below the predetermined water solution level (72); and
a negative electrode (90) opposite a positive electrode (92) on either side of the lower conveyor belt (76), the negative electrode (90) and the positive electrode (92) oriented vertically and the negative electrode (90) fully submerged within the predetermined water solution level (72), wherein said chamber (70) is configured to provide a pulsed electric field to a treatment space between the bottom surface of the upper conveyer belt (74) and a top surface of the lower conveyor belt (76), and between the negative electrode (90) and the positive electrode (92).

8. The pulsed electric field treatment chamber of claim 7, wherein the positive electrode (92) is only partially submerged below the predetermined water solution level (72), and wherein a lower end of the positive electrode (92) is aligned at a depth substantially equal with a lower end of the negative electrode (90), said positive electrode (92) being longer than the negative electrode (90) and electrically connected above the predetermined water solution level (72).

9. The pulsed electric field treatment chamber of claim 7 or claim 8, comprising a negative strap connection through the predetermined water solution level (72) and running below the lower conveyor belt (76).

10. The pulsed electric field treatment chamber of any one of claims 7 to 9, wherein the chamber (70) is configured to apply an electric field of at least 0.8 kV/cm to the treatment space.

11. The pulsed electric field treatment chamber of any one of claims 7 to 10, wherein the upper conveyor belt (74) and lower conveyor belt (76) comprise a plurality of equally spaced flights (75, 77) that project into the treatment space.

**Patentansprüche**

1. Verfahren zum Herstellen von frittierten Produktchips, wobei das Verfahren die folgenden Schritte umfasst:

Anlegen eines gepulsten elektrischen Feldes an eine Vielzahl von ganzem Rohprodukt in einer Behandlungskammer mit gepulstem elektrischem Feld, wobei die Behandlungskammer einen Behandlungsraum zwischen einer negativen und einer positiven Elektrode umfasst, wobei die negative Elektrode und die positive Elektrode in einer vertikalen Konfiguration ausgerichtet sind;
Aufschneiden des gepulsten Produkts zum Bilden von Scheiben mit einer Dicke von weniger als 2,5 mm (0,1 Zoll);
sofortiges Blanchieren der Scheiben in einer Wasserlösung bei einer Temperatur über 62,8 °C (145 °F) zum Bilden von blanchierten Scheiben; und
Frittieren der blanchierten Scheiben zum Bilden einer Vielzahl von Produktchips;
wobei das an das Rohprodukt angelegte gepulste elektrische Feld ein elektrisches Feld von mindestens 0,8 kV/cm umfasst;
wobei das Produkt Süßkartoffeln umfasst; und
wobei der Schritt des Frittierens das Frittieren bis zu einem fertigen Feuchtigkeitsgehalt von weniger als 3,5 % umfasst und die Vielzahl von Produktchips einen Ölgehalt zwischen 28 % und 44 % aufweist.

2. Verfahren nach Anspruch 1, wobei das an das Rohprodukt angelegte gepulste elektrische Feld ein elektrisches Feld von 0,8 bis 3,0 kV/cm umfasst.

**3.** Verfahren nach Anspruch 1 oder Anspruch 2, wobei der Schritt des Blanchierens in einer turbulenten Umgebung, umfassend das kontinuierliche Rühren mit Einspritzung von Wasser und Luft, frei von mechanischer Bewegung stattfindet und/oder das Blanchieren eine Temperatur zwischen 62,8 °C und 90,6 °C (145 °F und 195 °F) umfasst und/oder wobei die Wasserlösung frei von Salzen ist.

**4.** Verfahren nach einem der Ansprüche 1 bis 3, wobei der Schritt des Blanchierens für weniger als 6 Minuten durchgeführt wird und/oder der Schritt des Frittierens für bis zu 14 Minuten durchgeführt wird.

**5.** Verfahren nach einem der vorstehenden Ansprüche, wobei die Vielzahl von Produktchips einen Ölgehalt zwischen 28 % und 40 % aufweist.

**6.** Atmosphärisch frittierter Süßkartoffelchip, hergestellt mit dem Verfahren nach einem der vorstehenden Ansprüche, wobei der Schritt des Frittierens ein Schritt des atmosphärischen Frittierens ist zum Bilden einer Vielzahl von haltbaren Süßkartoffelchips, wobei der atmosphärisch frittierte Süßkartoffelchip eine Härte von 395 bis 800 Gramm Spitzenkraft aufweist, bestimmt mit einem Texturanalysegerät, einen Ölgehalt von 28 % bis 44 % aufweist; eine Dicke von weniger als 2,5 mm (0,1 Zoll) und ein Feuchtigkeitsgehalt von weniger als 3,5 % aufweist.

**7.** Behandlungskammer mit gepulstem elektrischem Feld (70), wobei die Kammer umfasst:

eine innere Kammer, die einen vorbestimmten Wasserlösungsstand (72) aufweist;
ein oberes Förderband (74), von dem zumindest die Unterseite unter dem vorbestimmten Wasserlösungsstand (72) liegt;
ein unteres Förderband (76), das vollständig unter dem vorbestimmten Wasserlösungsstand (72) liegt; und
eine negative Elektrode (90) gegenüber einer positiven Elektrode (92) auf beiden Seiten des unteren Förderbandes (76), wobei die negative Elektrode (90) und die positive Elektrode (92) vertikal ausgerichtet sind und die negative Elektrode (90) vollständig in den vorbestimmten Wasserlösungsstand (72) getaucht ist, wobei die Kammer (70) dafür konfiguriert ist, ein gepulstes elektrisches Feld für einen Behandlungsraum zwischen der Unterseite des oberen Förderbandes (74) und einer Oberseite des unteren Förderbandes (76) und zwischen der negativen Elektrode (90) und der positiven Elektrode (92) bereitzustellen.

**8.** Behandlungskammer mit gepulstem elektrischem Feld nach Anspruch 7, wobei die positive Elektrode (92) nur teilweise unter den vorbestimmten Wasserlösungsstand (72) getaucht ist und wobei ein unteres Ende der positiven Elektrode (92) in einer Tiefe im Wesentlichen gleich zu einem unteren Ende der negativen Elektrode (90) ausgerichtet ist, wobei die positive Elektrode (92) länger ist als die negative Elektrode (90) und elektrisch über dem vorbestimmten Wasserlösungsstand (72) verbunden ist.

**9.** Behandlungskammer mit gepulstem elektrischem Feld nach Anspruch 7 oder Anspruch 8, umfassend eine negative Bandverbindung durch den vorbestimmten Wasserlösungsstand (72) und unter dem unteren Förderband (76) verlaufend.

**10.** Behandlungskammer mit gepulstem elektrischem Feld nach einem der Ansprüche 7 bis 9, wobei die Kammer (70) dafür konfiguriert ist, ein elektrisches Feld von mindestens 0,8 kV/cm an den Behandlungsraum anzulegen.

**11.** Behandlungskammer mit gepulstem elektrischem Feld nach einem der Ansprüche 7 bis 10, wobei das obere Förderband (74) und das untere Förderband (76) eine Vielzahl von Mitnehmern (75, 77) mit gleichen Abständen umfassen, die in den Behandlungsraum ragen.

## Revendications

**1.** Procédé de fabrication de chips de produits frits, le procédé comprenant les étapes consistant à :

appliquer un champ électrique pulsé à une pluralité de produits crus entiers dans une chambre de traitement à champ électrique pulsé, la chambre de traitement comprenant un espace de traitement entre une électrode négative et une électrode positive, l'électrode négative et l'électrode positive étant orientées selon une configuration verticale ;
trancher les produits soumis aux impulsions pour former des tranches d'une épaisseur inférieure à 2,5 mm (0,1 pouce) ;

blanchir immédiatement les tranches dans une solution aqueuse à une température supérieure à 62,8°C (145°F) pour former des tranches blanchies ; et

frire les tranches blanchies pour former une pluralité de chips de produits ;

dans lequel le champ électrique pulsé appliqué au produit cru comprend un champ électrique d'au moins 0,8 kV/cm ;

dans lequel le produit comprend des patates douces ; et

dans lequel l'étape de friture comprend la friture jusqu'à une teneur en humidité finale inférieure à 3,5 % et la pluralité de chips de produits comprend une teneur en huile comprise entre 28 % et 44 %.

2. Procédé de la revendication 1 dans lequel le champ électrique pulsé appliqué au produit cru comprend un champ électrique de 0,8 à 3,0 kV/cm.

3. Procédé de la revendication 1 ou la revendication 2, dans lequel l'étape de blanchiment se déroule dans un environnement turbulent comprenant une agitation continue avec injection d'eau et d'air, sans agitation mécanique, et/ou le blanchiment comprend une température entre 62,8°C et 90,6°C (145°F et 195°F) et/ou dans lequel la solution aqueuse est exempte de sels.

4. Procédé de l'une des revendications 1 à 3, dans lequel l'étape de blanchiment est effectuée pendant moins de 6 minutes et/ou l'étape de friture est effectuée pendant 14 minutes au plus.

5. Procédé de toute revendication précédente dans lequel la pluralité de chips de produits comprend une teneur en huile entre 28 % et 40 %.

6. Chips de patate douce frite en conditions atmosphériques, fabriquées par le procédé de toute revendication précédente dans lequel l'étape de friture est une étape de friture en conditions atmosphériques pour former une pluralité de chips de patate douce de longue conservation, dans lesquelles les chips de patate douce frites en conditions atmosphériques comprennent une dureté de 395 à 800 grammes de force maximale, telle que déterminée par un analyseur de texture, une teneur en huile de 28 % à 44 % ; une épaisseur inférieure à 2,5 mm (0,1 pouce), et une teneur en humidité inférieure à 3,5 %.

7. Chambre de traitement à champ électrique pulsé (70), ladite chambre comprenant :

une chambre intérieure comprenant un niveau de solution aqueuse prédéterminé (72) ;

une bande transporteuse supérieure (74) dont au moins la surface de fond est en dessous du niveau de solution aqueuse prédéterminé (72) ;

une bande transporteuse inférieure (76) entièrement en dessous du niveau de solution aqueuse prédéterminé (72) ;

et

une électrode négative (90) opposée à une électrode positive (92) de chaque côté de la bande transporteuse inférieure (76), l'électrode négative (90) et l'électrode positive (92) étant orientées verticalement et l'électrode négative (90) étant entièrement submergée dans le niveau de solution aqueuse prédéterminé (72), dans laquelle ladite chambre (70) est configurée pour fournir un champ électrique pulsé à un espace de traitement entre la surface de fond de la bande transporteuse supérieure (74) et une surface de haut de la bande transporteuse inférieure (76), et entre l'électrode négative (90) et l'électrode positive (92).

8. Chambre de traitement à champ électrique pulsé de la revendication 7, dans laquelle l'électrode positive (92) est seulement partiellement submergée en dessous du niveau de solution aqueuse prédéterminé (72), et dans laquelle une extrémité inférieure de l'électrode positive (92) est alignée à une profondeur sensiblement égale à une extrémité inférieure de l'électrode négative (90), ladite électrode positive (92) étant plus longue que l'électrode négative (90) et connectée électriquement au-dessus du niveau de solution aqueuse prédéterminé (72).

9. Chambre de traitement à champ électrique pulsé de la revendication 7 ou la revendication 8, comprenant une connexion par courroie négative à travers le niveau de solution aqueuse prédéterminé (72) et passant en dessous de la bande transporteuse inférieure (76).

10. Chambre de traitement à champ électrique pulsé de l'une des revendications 7 à 9, dans laquelle la chambre (70) est configurée pour appliquer un champ électrique d'au moins 0,8 kV/cm à l'espace de traitement.

**11.** Chambre de traitement à champ électrique pulsé de l'une des revendications 7 à 10, dans laquelle la bande transporteuse supérieure (74) et la bande transporteuse inférieure (76) comprennent une pluralité de palettes équidistantes (75, 77) qui font saillie dans l'espace de traitement.

FIG. 1

FIG. 4

FIG. 2A

FIG. 2B

FIG. 3

## FIG. 5

## FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006121397 A1
- US 2008241315 A1
- EP 1994836 A1
- WO 0197636 A1
- WO 2014161935 A1
- WO 2017024162 A1
- WO 2006053563 A2